# DEMANDE DE BREVET EUROPEEN

(11) **EP 2 174 817 A1**
(43) Date de publication de la demande: **14.04.2010**
(21) Numéro de dépôt: 09171437.8
(22) Date de dépôt: 28.09.2009
(51) Int. Cl.: B60K 11/04, F28F 9/00

(54) **Dispositif de montage securisé d'un radiateur de véhicule**

(30) Priorité: 09.10.2008 FR 0856833
(71) Demandeur: Peugeot Citroën Automobiles SA, 78140 Vélizy-Villacoublay (FR)
(72) Inventeur: Peru, Marc, 92290 Chatenay-Malabry (FR)
(74) Mandataire: Allain, Laurent

(57) **Abrégé**

L'invention se rapporte à un dispositif de montage d'un module de refroidissement (1) dans un véhicule, comprenant des premiers moyens de fixation solidaires de la structure du véhicule, et des deuxièmes moyens de fixation solidaires du module de refroidissement (1), lesdits premiers moyens coopérant avec lesdits deuxièmes moyens pour permettre au module (1) de reculer en cas de choc frontal sur ledit véhicule.

La principale caractéristique d'un dispositif de montage selon l'invention, est que les premiers moyens comprennent au moins un rail (4) de guidage muni d'au moins une crémaillère (5), et en ce que les deuxièmes moyens comprennent au moins une roue crantée (7) reliée à au moins un patin (8) de coulissement, la roue crantée (7) interagissant avec la crémaillère (5) pour permettre le déplacement du patin (8) dans le rail, en cas de choc frontal.

## Description

Le domaine technique de l'invention concerne les dispositifs de montage de modules de refroidissement de véhicules, dotés de moteurs à combustion nécessitant un circuit de refroidissement. Plus précisément, l'invention se rapporte à un dispositif de montage d'un module de refroidissement, permettant de préserver l'intégrité de ce module, dans le cas d'un choc frontal à basse énergie comme, par exemple, un choc contre un autre véhicule à une vitesse inférieure à 15 km/h. Les dispositifs de montage selon l'invention, sont particulièrement adaptés aux véhicules automobiles, dotés d'un module de refroidissement dans sa partie avant, et susceptibles d'être percutés à l'avant par un objet solide quelconque ou un autre véhicule.

Pour bien comprendre l'invention, le terme « module de refroidissement » est équivalent à un « radiateur » ou à un « groupe moto ventilateur traditionnel ».

Les dispositifs de montage de radiateurs, existent et ont déjà fait l'objet de brevets. On peut, par exemple, citer le brevet FR2823272, qui concerne un dispositif de fixation d'un échangeur de chaleur, sur la structure du véhicule, par l'intermédiaire d'un pion et d'un plot rainuré intégrant deux positions pour le pion: une position initiale et une position reculée, sous l'effet d'un choc frontal. Ainsi, sous l'effet d'un choc, l'échangeur thermique passe d'une position initiale avancée, à une position reculée. Ce concept de dispositif à deux positions, est également repris dans le brevet FR2833539. Bien que les dispositifs de montage décrits dans ces deux brevets, permettent à l'échangeur thermique de reculer brutalement sous l'effet d'un choc, pour éviter notamment à ce dernier de se déformer significativement, la phase d'arrêt dans la deuxième position reculée, risque également d'être brutale, avec pour conséquence une possibilité d'endommagements de type déformation ou rupture. Le brevet FR2894555, quant à lui, décrit un dispositif de montage d'un module de refroidissement, favorisant son recul en cas de choc frontal. Ce dispositif se fonde sur un mécanisme sophistiqué, faisant intervenir un système de bras pivotants, le maintien en position étant assuré par deux ergots, aptes à se rompre sous l'effet d'un choc. Le dispositif divulgué dans ce brevet, est complexe, et nécessite un réglage fin des différents éléments impliqués, qu'il met en oeuvre.

Le dispositif de montage d'un radiateur dans un véhicule selon l'invention, vise à remédier aux inconvénients précités. Il est conçu de façon sécuritaire, pour également permettre le recul dudit radiateur, en cas de choc frontal à l'avant dudit véhicule, ce recul pouvant être d'amplitude variable selon l'intensité du choc. En effet, les dispositifs de montage selon l'invention, permettent un recul adapté du radiateur, sans à-coups, préservant, en toutes circonstances, son intégrité. Le dispositif selon l'invention, permet aussi, après le choc, de repositionner aisément le radiateur dans sa configuration initiale, par une simple manipulation, sans réparation, et sans une intervention lourde nécessitant l'utilisation d'un outillage adapté. Enfin, le dispositif de montage selon l'invention, est prévu pour régler avec une bonne précision, le positionnement initial du radiateur sous le capot du véhicule. En effet, dans le cas d'un véhicule intégrant plusieurs versions de motorisation, le module de refroidissement va occuper une place variable dans le véhicule, selon son axe longitudinal, cet emplacement étant dicté par l'encombrement du moteur. Pour toutes ces déclinaisons de motorisations concernant un même modèle de véhicule, le dispositif de montage selon l'invention, est universel en permettant au radiateur d'occuper une position variable.

La présente invention a pour objet un dispositif de montage d'un module de refroidissement dans un véhicule, comprenant des premiers moyens de fixation solidaires de la structure du véhicule, et des deuxièmes moyens de fixation solidaires du module de refroidissement, lesdits premiers moyens coopérant avec lesdits deuxièmes moyens pour permettre au module de reculer en cas de choc frontal sur ledit véhicule. La principale caractéristique d'un dispositif de montage selon l'invention, est que les premiers moyens comprennent au moins un rail de guidage muni d'au moins une crémaillère, et les deuxièmes moyens comprennent au moins une roue crantée reliée à au moins un patin de coulissement, la roue crantée interagissant avec la crémaillère pour permettre le déplacement du patin dans le rail, en cas de choc frontal. L'invention concerne essentiellement les véhicules dotés d'un moteur à combustion, nécessitant un circuit d'aération et un circuit de refroidissement. Le module de refroidissement peut être assimilé à un radiateur, ou à un groupe moto ventilateur traditionnel de véhicule automobile. Dans le cas d'un choc frontal, le déplacement du patin dans le rail, signifie ou sous-entend, que c'est le module de refroidissement, qui recule sous l'effet du choc, ce recul s'effectuant au niveau du patin, qui glisse dans le rail et qui est solidaire dudit module.

Selon un mode de réalisation préféré de l'invention, une crémaillère est représentée par une tige crantée ou dentée.

Préférentiellement, le dispositif comprend deux rails de guidage, deux roues crantées et deux patins de coulissement, les deux rails étant parallèles entre eux. De cette manière, le déplacement du module s'effectuera de façon homogène et équilibrée, le long de deux rails.

Avantageusement, le module de refroidissement occupe une place transversale dans le véhicule, et les deux rails sont horizontaux, et orientés selon une direction longitudinale du véhicule.

De façon préférentielle, le module de refroidissement se présente sous la forme d'un parallélépipède rectangle, et les deux rails sont disposés dans la zone supérieure dudit module, au niveau de ses extrémités latérales. Autrement dit, le module de refroidissement est relié à la structure du véhicule en étant placé sous les deux rails de coulissement.

De façon avantageuse, les deuxièmes moyens de fixation comprennent deux bras verticaux, reliant chacun le module à un patin de coulissement, chaque roue crantée étant montée pivotante autour de chacun desdits bras. Ainsi, les roues crantées peuvent tourner, de façon autonome, autour des bras verticaux. Préférentiellement, les roues pivotent dans un plan horizontal.

Avantageusement, l'extrémité inférieure de chaque bras est au contact du module, et l'extrémité supérieure de chaque bras supporte le patin, la roue crantée étant interposée entre le module et ledit patin.

De façon préférentielle, chaque roue crantée est montée autour de chaque bras, au moyen de roulements à billes. De cette manière, la rotation de chaque roue crantée est favorisée au moyen de roulements à billes.

De façon avantageuse, chaque bras émerge de chaque patin, ladite partie émergeante de chaque bras étant dotée de moyen de réglage, permettant de positionner le patin dans le rail. Chaque bras émerge du dessus de chaque patin, permettant à un opérateur d'accéder aisément au réglage de la position du radiateur le long du rail, le réglage de positionnement du patin revenant à régler le positionnement du radiateur..

Préférentiellement, le moyen de réglage est constitué par une vis papillon.

Avantageusement, chaque rail est délimité latéralement par deux rebords longitudinaux, le fond de chaque rail étant constitué par un cadre creux, reliant lesdits rebords.

De façon préférentielle, chaque bras traverse le cadre creux de chaque rail, de manière à ce que chaque patin repose sur les bords supérieurs dudit cadre.

De façon avantageuse, chaque rail comprend deux tiges crantées, placées en regard l'une de l'autre, et disposées longitudinalement le long de ses rebords, la distance entre chaque tige permettant aux crans de la roue de s'insérer dans les espacements situés entre les crans desdites tiges.

Les dispositifs de montage selon l'invention, présentent l'avantage de permettre un recul du module de refroidissement, en cas de choc frontal, sans frottements et sans déformation importante de pièces, garantissant ainsi un déplacement sans accrocs. Ils ont également l'avantage de permettre, sans réparation et sans interventions lourdes, le repositionnement du module de refroidissement, une fois qu'il a été déplacé suite à un choc, par une simple manipulation de l'opérateur.

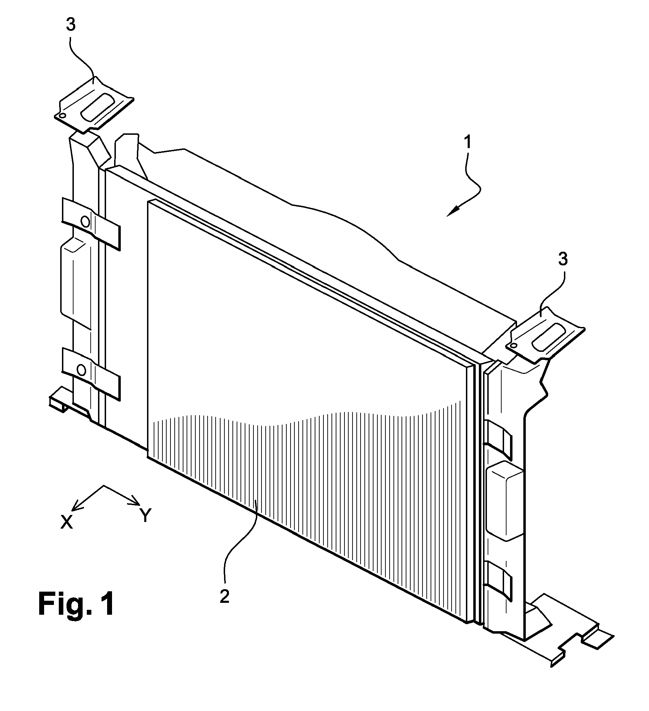

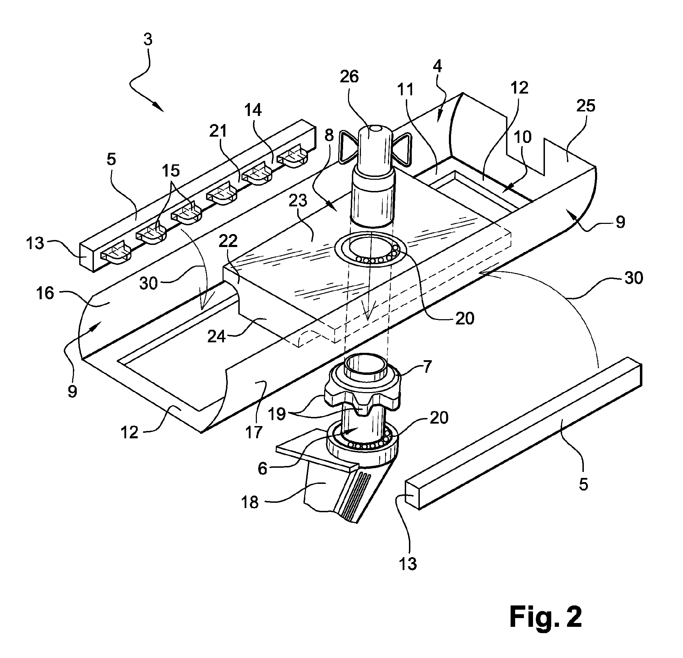

On donne ci-après une description détaillée d'un mode de réalisation préféré d'un dispositif de montage d'un module de refroidissement selon l'invention, en se référant aux figures 1 et 2.
- La figure 1 est une vue en perspective d'un module de refroidissement localisant un dispositif de montage selon l'invention
- La figure 2 est une agrandie, simplifiée et partiellement éclatée d'un dispositif de montage selon l'invention.

En se référant à la figure 1, un module de refroidissement est matérialisé par un radiateur 1 d'un véhicule automobile, doté d'un moteur à combustion. Ce radiateur 1 a la forme d'un parallélépipède rectangle, présentant une face avant 2 verticale, dont la plus grande dimension s'étend suivant l'axe Y, qui est transversal par rapport à l'axe longitudinal X du véhicule automobile. Lorsque ledit véhicule subit un choc frontal sur sa partie avant, l'énergie se transmet suivant son axe longitudinal X, pour atteindre la face avant 2 du radiateur 1, qui a alors tendance à accompagner ledit choc, en reculant. Le dispositif de montage selon l'invention, permettant de fixer le radiateur 1 à la structure du véhicule, est réalisé en deux parties 3 identiques, chacune de ces parties 3 étant disposée dans la zone supérieure du radiateur 1, au niveau de ses deux extrémités latérales. Selon une autre variante de réalisation préférée de l'invention, le dispositif de montage pourrait se décomposer en quatre parties identiques, disposées au niveau de ses quatre extrémités latérales, deux en zone inférieure et deux en zone supérieure.

En se référant à la figure 2, chacune des deux parties 3 identiques du dispositif de montage selon l'invention, comprend un rail de guidage 4, fixé sur la structure du véhicule, deux crémaillères 5, sous la forme de deux tiges crantées, et solidaires dudit rail 4, un bras 6 relié au radiateur 1 et supportant une roue crantée 7 et un patin 8 de coulissement, apte à se déplacer le long du rail 4. Le rail 4 est horizontal, et est disposé selon un axe longitudinal X du véhicule. Ce rail 4 est délimité latéralement par deux rebords longitudinaux 9 et parallèles, le fond dudit rail 4 étant constitué par un cadre creux 10, de forme rectangulaire et allongé, dont les des deux grands cotés 11 dudit cadre 10 sont au contact d'un rebord 9 longitudinal, et dont les deux petits cotés 12 délimitent longitudinalement le rail 4. Ce cadre 10 étant en position horizontale, présente donc une face inférieure et une face supérieure. Chaque crémaillère 5 est constituée par une tige parallélépipédique allongée, de section 13 carrée, une face allongée 14 de ladite tige 5, supportant une série de dents 15 alignées, et régulièrement espacées les unes des autres. Chacune de ces dents 15 comporte un contour arrondie, et l'espacement 21 entre deux dents successives 15, correspond sensiblement à la largeur d'une dent 15. Chaque rebord 9 longitudinal du rail 4, possède une face interne 16 et une face externe 17, chaque crémaillère 5 étant fixée sur la face interne 16 de chacun desdits rebords 9, de sorte que les dents 15 de l'une font face aux dents de l'autre, en étant parfaitement alignées sur celles-ci. Les flèches 30 matérialisent la destination de chaque crémaillère 5 sur le rail 4. Le bras 6 est cylindrique et vertical, son extrémité inférieure 18 étant relié au radiateur 1, et son extrémité supérieure supportant le patin 8 de coulissement. La roue crantée 7 est constituée par une bague possédant à sa périphérie une série de dents 19, régulièrement espacées, ladite bague 7 étant montée autour du bras 6, au moyen de roulements à billes 20, entre le patin 8 et le radiateur 1. De cette manière, la bague 7 peut pivoter librement autour du bras 6, dans un plan horizontal, juste en dessous dudit patin 8. La distance séparant les deux crémaillères 5 ainsi que le positionnement de la roue crantée 7 sur le bras 6, sont tels, qu'ils permettent aux dents 19 de ladite roue 7 de s'insérer dans les espacements 21 situés entre les dents 15 de chaque crémaillère 5. Le patin 8 comporte une plate-forme supérieure 22 parallélépipédique, dotée notamment d'une face supérieure 23 plane et horizontale, et une embase 24 de largeur réduite. De cette manière, le patin 8 peut reposer sur la face supérieure du cadre 10, et plus précisément sur la face supérieure de ses deux grands cotés 11, au niveau de sa plate-forme 22 supérieure, tandis que son embase 24 occupe partiellement la partie ajourée du cadre 10. Le rail 4 possède, à sa partie arrière, une butée d'arrêt 25, représentée par un rebord transversal, et destinée à stopper, éventuellement, la course du radiateur 1 en cas de choc frontal. La partie distale de l'extrémité supérieure du bras 6, émerge de la face supérieure 23 du patin 8, et est munie d'une vis papillon 26, pour permettre le réglage du positionnement initial du radiateur 1 dans le véhicule automobile.

Dans le cas d'un choc frontal sur le véhicule, l'énergie se transmet au radiateur 1, qui recule le long des rails 4, grâce à l'interaction de la roue crantée 7 avec les crémaillères 5. Après le choc, aucune pièce n'ayant été affectée par ce déplacement, il est possible et facile de ramener le radiateur 1 à sa position initiale en le faisant coulisser le long des rails 4.

## Revendications

1. Dispositif de montage d'un module de refroidissement (1) dans un véhicule, comprenant des premiers moyens de fixation solidaires de la structure du véhicule, et des deuxièmes moyens de fixation solidaires du module de refroidissement (1), lesdits premiers moyens coopérant avec lesdits deuxièmes moyens pour permettre au module (1) de reculer en cas de choc frontal sur ledit véhicule, **caractérisé en ce que** les premiers moyens comprennent au moins un rail (4) de guidage muni d'au moins une crémaillère (5), et **en ce que** les deuxièmes moyens comprennent au moins une roue crantée (7) reliée à au moins un patin (8) de coulissement, la roue crantée (7) interagissant avec la crémaillère (5) pour permettre le déplacement du patin (8) dans le rail, en cas de choc frontal.

2. Dispositif selon la revendication 1, **caractérisé en ce qu'**il comprend deux rails (4) de guidage, deux roues crantées (7) et deux patins (8) de coulissement, les deux rails (4) étant parallèles entre eux.

3. Dispositif selon la revendication 2, **caractérisé en ce que** le module de refroidissement (1) occupe une place transversale dans le véhicule, et **en ce que** les deux rails (4) sont horizontaux, et orientés selon une direction longitudinale du véhicule.

4. Dispositif selon la revendication 3, **caractérisé en ce que** le module de refroidissement (1) se présente sous la forme d'un parallélépipède rectangle, et **en ce que** les deux rails (4) sont disposés dans la zone supérieure dudit module (1), au niveau de ses extrémités latérales.

5. Dispositif selon l'une quelconque des revendications 3 ou 4, **caractérisé en ce que** les deuxièmes moyens de fixation comprennent deux bras (6) verticaux, reliant chacun le module (1) à un patin (8) de coulissement, chaque roue crantée (7) étant montée pivotante autour de chacun desdits bras (6).

6. Dispositif selon la revendication 5, **caractérisé en ce que** l'extrémité inférieure (18) de chaque bras (6) est au contact du module (1), et **en ce que** l'extrémité supérieure de chaque bras (6) supporte le patin (8), la roue crantée (7) étant interposée entre le module (1) et ledit patin (8).

7. Dispositif selon l'une quelconque des revendications 5 ou 6, **caractérisé en ce que** chaque roue crantée (7) est montée autour de chaque bras (6), au moyen de roulements à billes (20).

8. Dispositif selon l'une quelconque des revendications 5 à 7, **caractérisé en ce que** chaque bras (6) émerge de chaque patin (8), ladite partie émergeante de chaque bras (6) étant dotée de moyen de réglage (26), permettant de positionner le patin (8) dans le rail (4).

9. Dispositif selon la revendication 8, **caractérisé en ce que** le moyen de réglage est constitué par une vis papillon (26).

10. Dispositif selon l'une quelconque des revendications 5 à 9, **caractérisé en ce que** chaque rail (4) est délimité latéralement par deux rebords (9) longitudinaux, le fond de chaque rail (4) étant constitué par un cadre (10) creux, reliant lesdits rebords (9).

11. Dispositif selon la revendication 10, **caractérisé en ce que** chaque bras (6) traverse le cadre (10) creux de chaque rail (4), de manière à ce que chaque patin (8) repose sur les bords supérieurs dudit cadre (10).

12. Dispositif selon l'une quelconque des revendications 10 ou 11, **caractérisé en ce que** chaque rail (4) comprend deux tiges (5) crantées, placées en regard l'une de l'autre, et disposées longitudinalement le long de ses rebords (9), la distance entre chaque tige (5) permettant aux crans (19) de la roue (7) de s'insérer dans les espacements (21) situés entre les crans (15) desdites tiges (5).
